# EUROPEAN PATENT APPLICATION

(11) **EP 4 311 428 A1**
(43) Date of publication of application: **31.01.2024**
(21) Application number: 23187200.3
(22) Date of filing: 24.07.2023
(51) Int. Cl.: A01G 2/30, A01N 3/04

(54) **METHOD FOR MAKING GRAFTED SCIONS, PARTICULARLY FOR VITICULTURE OR FRUIT GROWING**

(30) Priority: 26.07.2022 IT 202200015711
(71) Applicant: Sintesi e Ricerca S.p.A., 12025 Dronero (CN) (IT)
(72) Inventor: AMBROGGIO, Giuseppe, 10098 Rivoli (TO) (IT)
(74) Representative: Bottero, Carlo

(57) **Abstract**

Method for making grafted scions, wherein the grafting area is coated with a waxy material comprising at least one natural wax, kept at a temperature such as to be in fluid form. The grafting area thus coated is then left to cool, so as to obtain solidification of the waxy material. Natural waxes are in themselves endowed with antiseptic, antibacterial and antifungal properties such as to guarantee superior efficacy compared to the petroleum-based grafting waxes currently on the market (usually microcrystalline and/or paraffinic waxes). Furthermore, natural waxes, when heated beyond their melting point, can have characteristics of fluidity and covering capacity completely comparable to those of oilbased waxes. These waxes can therefore also be used in highly productive mechanized processes, as well as in traditional manual processes.

## Description

The present invention relates to a method for making grafted scions, in particular for viticulture or fruit growing.

In the agricultural and horticultural sector, reproduction by scions is widely used to obtain new plants. It is an agamic (i.e. asexual) vegetative multiplication technique which involves cutting off a portion of the plant to be reproduced, generally a portion of the green and young branches, and then inserting the cut end into a soil suitable for rooting, so as to generate an autonomous seedling, which will then be planted (often called "rooted scions"). Reproduction by scions is particularly widespread in viticulture and fruit growing, for example for pear, apple, cherry, peach and apricot trees.

Grafting is an agronomic practice for the agamic multiplication of plants achieved with the anatomical - physiological fusion of two different individuals (called "bionts"), called respectively "rootstock" and "graft", of which the first constitutes the basal part of the plant and the second the aerial part. Sometimes, the grafting is made with three entities, by interposing a third biont, called "intermediary", between the rootstock and the graft. The graft consists in making a notch on the rootstock into which the graft is inserted, which is generally made up of a portion of a branch or a bud, in the latter case called "eye" or "shield". Once the graft has consolidated, a single plant made up of two different portions is obtained. The histological fusion takes place thanks to the callus that forms between the two cut surfaces, precisely where the cambium meristems meet. In floriculture, gardening and fruit growing, grafting is widely adopted for the multiplication of woody plants, rarely for herbaceous ones.

It is common practice to prepare grafted scions, i.e. consisting of the unification of two portions of plants (bionts) of different species as indicated above, so as to allow the development of plants with advantageous characteristics, not obtainable with a single species. For example, in the viticultural field, it is common practice to graft a branch of a variety that produces high quality grapes onto a branch of a less valuable but more resistant and vigorous variety.

It is also known that a plant subjected to strong physical stress, such as a grafting cut, is subject to multiple risks of a physical nature, such as atmospheric agents, UV rays and thermal shock, or of a biological nature, such as infections or diseases due to the infiltration of pathogens.

It is therefore necessary to protect the cut end of the graft, opposite the end of the rootstock intended for root development, and the area where the graft is made from the action of these physical and biological agents and to favor the histological fusion between the graft and rootstock, so as to guarantee the sprouting of the graft and therefore the development of the plant once planted.

For this purpose, the terminal portion of the scion, where the graft was made, is generally subjected to "paraffinization", i.e. the application of a wax of petroleum origin, in particular a paraffinic or microcrystalline wax. The paraffinization is done by immersing the end of the scion in a bath of melted wax, which then solidifies at room temperature forming a flexible and resistant protective layer. This protective layer performs various functions, in particular it prevents the dehydration of the plant tissue and prevents the entry of pathogens which can jeopardize the vitality of the scion. For this purpose, to further improve its functionality, additives with suitable synthetic antibiotics which have an antiseptic, antibacterial and antifungal action and/or with hormones which favor the regeneration of the plant tissue can be added to the wax. Waxing makes it possible to automate the process at least in part and to carry out the operation quickly and safely on a large number of scions at the same time.

As an alternative to paraffination, it is possible to protect the graft area with a plastic material tape (called buddy tape), sometimes also with antibiotics and/or growth hormones added, which is wrapped around the scion. It is an operation that is carried out manually with evidently reduced productivity.

The Applicant has faced the problem of finding a method for making grafted scions, in particular for viticulture or fruit growing, which ensures effective protection of the grafting area, avoiding the use of additives, such as antibiotics and synthetic hormones.

The Applicant has found that this problem can be solved by providing a protective coating to one end of the grafted scions by applying a waxy material comprising at least one natural wax, optionally mixed with at least one petroleum or synthetic wax, without the addition of synthetic products such as antibiotics and hormones. The natural wax performs an effective action both against dehydration and against the penetration of pathogens, guaranteeing a significant success rate (better than that of products currently on the market) in the rooting of the scions and in the subsequent sprouting of the scions once planted.

The present invention therefore relates to a method for making grafted scions, which comprises:
preparing a first biont, consisting of a portion of a first vegetable variety, and a second biont, consisting of a portion of a second vegetable variety;
grafting the first bion and the second bion together so as to form a grafting zone between the first and second plant varieties;
coating the graft area with a waxy material comprising at least one natural wax, said waxy material being kept at a temperature such as to be in a fluid form;
leaving the coated grafting area to cool so as to obtain the solidification of said waxy material.

The use of natural waxes makes it possible to avoid the addition of synthetic additives, such as antibiotics and/or hormones, since the Applicant has found that natural waxes are in themselves endowed with antiseptic, antibacterial and antifungal properties such as to guarantee superior efficacy compared to currently commercially available petroleum-based grafting waxes (usually microcrystalline and/or paraffinic waxes), as they are or also with added antibiotics and/or hormones. Furthermore, some natural waxes, when heated beyond their melting temperature, can have characteristics of fluidity and covering capacity, which are entirely comparable to those of petroleum-based waxes. These waxes can therefore also be used in highly productive mechanized processes, as well as in traditional manual processes.

By "natural wax" we mean a wax obtained from renewable sources, produced by the metabolism of plants, animals or microorganisms. Therefore, waxes obtained through the treatment of fossil sediments, such as oil, coal, bituminous schists and the like, or from other non-renewable sources, such as peat, are excluded from this definition. In this regard, see for example "Ullmann's Encyclopedia of Industrial Chemistry" (2012), chapter "Waxes" edited by U. Wolfmeier et al, Vol. 39, pp. 111-172.

Natural waxes can be selected in particular from the following product categories:
(a) animal waxes, for example wool wax (lanolin), or waxes produced by insects, such as bees or cochineal;
(b) vegetable waxes, for example: palm wax, candelilla, retamus, flax, cotton, olive, soy, sunflower, rapeseed, carnauba, hemp, sugar cane, esparto, sorghum grain, rice; waxes from roots and barks, japanwax, cranberry, myrica; waxes from the cuticle of fruits, floral waxes, or waxes deriving from natural oils, such as jojoba or sunflower.

Those produced by microorganisms also fall into the category of natural waxes.

Particularly preferred are olive wax and beeswax, or mixtures thereof.

Preferably, mixtures of the different types of natural waxes indicated above can be used, so as to combine the advantages of each. For example, mixtures of at least two natural waxes selected from: carnauba wax, candelilla wax, olive wax, beeswax, lanolin are preferred. These mixtures can be particularly advantageous as they allow the various naturally present active substances to be combined, thus increasing the biological activity of the waxy material.

In addition to the biological activity, the waxy material requires chemical-physical properties suitable for use, in particular a good mechanical resistance at both low and high temperatures and a flexibility such as to maintain continuity of the protective film, both on the freshly produced scions and when they are planted. In fact, the covering layer of the scion must be able to adapt to the growth of the plant, maintaining its continuity until the graft has definitively consolidated.

For this purpose, the waxy material according to the present invention preferably comprises at least one natural wax having a purely biological function (which we will call "activating wax") and at least one wax having a purely mechanical function (which we will call "base wax").

Preferably, the waxy material comprises 2% to 950 by weight, more preferably 5% to 90% by weight, even more preferably 10% to 85% by weight, of at least one activating wax, and 5% to 98% by weight, more preferably 10% to 95% by weight, even more preferably 15% to 90% by weight, of at least one base wax.

If an exclusively biological waxy material is required, i.e. free of waxes obtained from fossil sources or other non-renewable sources, both the activating wax and the base wax consist of natural waxes. In this case, the activating wax is preferably selected from: carnauba wax, candelilla wax, olive wax, beeswax, lanolin, or mixtures thereof; while the base wax is selected from: olive wax, palm wax, sunflower wax, soy wax, or mixtures thereof. It should be noted that olive wax can act both as an activating wax and as a base wax, thanks to its remarkable biological activity combined with mechanical properties suitable for use.

If the use of a waxy material which also contains waxes obtained from fossil sources or other non-renewable sources is acceptable, the activating wax is preferably selected, also in this case, from: carnauba wax, candelilla wax, olive wax, beeswax, lanolin, or mixtures thereof; while the base wax is selected from: paraffinic waxes, microcrystalline waxes, polyethylene waxes, amide waxes, Fischer-Tropsch waxes, acetylated mono-diglycerides , ethylene/vinyl acetate copolymers (in particular those with low density), or mixtures thereof.

Among the activating waxes, beeswax is particularly preferred as it has strong antiseptic, antibacterial and antifungal properties.

These properties are further increased if "organic" beeswax is used, i.e. produced by bees whose foraging area has not been treated with pesticides or other synthetic products: this guarantees a particularly high content of active natural substances (which confer the above antiseptic, antibacterial and antifungal properties).

Preferably, the waxy material to be used in the method according to the present invention has a melting temperature from 40°C to 90°C, more preferably from 55°C to 80°C. These melting temperatures make it possible to make the waxy material fluid without damaging the plant material with which it comes into contact.

The extraordinary properties of natural waxes, and in particular of the activating waxes defined above, which make them particularly suitable for protecting the grafting areas as described above, are mainly due to the presence of natural molecules, such as antioxidants, vitamins and esters between long-chain carboxylic acids and sterols.

Antioxidants are molecules capable of slowing down or inhibiting the oxidation of other molecules, preventing processes of decomposition and cell death. These substances are synthesized by plants to counteract two types of stress, biotic and abiotic. Biotic stress is generally caused by pathogenic, predatory or competitive species that could affect the graft causing the death of the plant. On the other hand, abiotic stress is caused in particular by UV radiation, desiccation and/or thermal shock. The presence of antioxidant molecules in natural waxes also favors the attraction of pollinating insects.

The antioxidants present in natural waxes include products with a phenolic structure, such as phenolic acids (for example gallic acid, vanillic acid, cinnamic acid, ferulic acid), or esters thereof. In this regard, it is interesting to note that numerous growth hormones commonly added to grafting waxes of petroleum origin, such as DBA (methyl-2,5-dichlorobenzoate), belong to the class of phenolic acids or esters thereof. It is therefore believed that the phenolic acids or their esters present in natural waxes can perform a similar action as stimulants of plant cell growth.

Another important class of natural antioxidants found in natural waxes are flavonoids. These are typically molecules characterized by a carbon skeleton of 15 carbon atoms composed of two phenyl rings and a heterocycle, often abbreviated as the C6-C3-C6 structure. Among them are to be mentioned: catechin, myricitin, quercetin, apigenin, kempferol, luteolin, rutin, pinocembrin, gallocatechin. Flavonoids are able to strongly absorb UV radiation, so as to protect the DNA of plant cells from photo-oxidative degradation. Furthermore, some flavonoids with a polymeric structure, such as condensed tannins, help both to strengthen the structure of the plant and to protect the shoots from bacterial attacks.

Another class of products present in natural waxes is made up of vitamins, which also perform an antioxidant action and other biological actions. Among them we mention: tocopherol (vitamin E), which is a powerful fat-soluble antioxidant; β-carotene (vitamin A), progenitor of carotenoids, which perform an important function in the process of chlorophyll photosynthesis, as they absorb light energy at different wavelengths compared to those of chlorophyll for which they act as accessory photoabsorbers, allowing to expand the range of absorbable solar radiation which is then transferred to the chlorophyll itself.

In natural waxes, and in particular in the natural base waxes defined above, there are also esters of long chain carboxylic acids with sterols, which give the product the typical waxy characteristics and allow to obtain a fluid product when heated to relatively low temperatures (generally around 85°C) with high covering capacity once solidified. In this way, these esters form a thin flexible protective film around the grafting area, which acts as a physical barrier against the entry of pathogens and reduces the loss of water by evaporation, thus preventing the graft from drying out.

The step of grafting the first bion with the second bion can be carried out according to well-known techniques, which are selected mainly according to the plant variety to be grafted. For example, the graft can be "bud-type", in which the nest is made up of a bud with bark and an underlying wooden shield, or "scion-type", in which the nest is made up of shoots or young branches (usually one year old) which bear at least two or three buds. The graft on the rootstock can be made in many ways, for example by cell, split, tongue or bridge. For example, in the viticulture sector, the most used graft is the scion one.

Once the graft has been made, the graft area is coated with the waxy material kept at a temperature such as to be in fluid form. Preferably, the coating step is carried out by immersing the biont which is intended to remain out of the ground to generate the new plant, until covering the area of the graft. In this way the waxy material covers not only the grafting area but also the biont up to its end. This modality allows not only to make the coating step easier, but also allows to protect the end of the biont from pathogens and atmospheric agents that could damage the scion. Furthermore, the fact of having also coated the end that remains in the air has a retarding effect on sprouting when the scion is planted, to the full advantage of the rooting of the other biont inserted into the ground, which is a critical phase for the success of the scion.

The coating can be carried out by immersion in a bath which contains the waxy material in molten form. The temperature of the bath is kept above the melting temperature of the waxy material, and in any case at a temperature not higher than 85°C, in order to avoid damaging the scion. For the same reason, the residence time in the bath is reduced to a minimum, generally from 0.1 to 10 seconds, preferably between 0.5 and 5 seconds. It is also possible to coat the graft area with repeated immersions for shorter times, always with the aim of avoiding damage to the scion.

The grafted scion coated as described above can be stored in a refrigerator while awaiting sale, in suitable conditions to avoid the attack of fungi or other harmful microorganisms. In this case, it is advisable to carry out a further coating by immersing the grafted scion in the bath of waxy material, so as to guarantee correct conservation. In any case, before being put into the field, the grafted scion is generally subjected to a further coating by immersion in a bath of waxy material.

The following embodiments are provided for illustrative purposes only of the present invention and must not be understood as limiting the scope of protection defined by the appended claims.

### EXAMPLE 1.

5000 scions were made, obtained from branches of a red grape vine, called Grenache, widely used in the production of red wine in various countries, particularly in Spain and France. The scions were grafted onto 6000 rootstocks of 140RU (Berlandieri x Rupestris group of the VCR - Vivai Cooperativi Rauschedo, Rauscedo (PN)).

The grafted scions were divided into five groups, each consisting of 1000 scions, and for each group the following coating products were used for the grafting area:
• Rebwachs Pro^{™}: paraffinic grafting wax with the addition of 2,5 dichlorobenzoic acid (growth hormone);
• standard grafting wax (mixture of paraffin wax and microcrystalline wax), without the addition of active ingredients;
• two different formulations (named Acti 80, Acti 50) according to the invention, the composition of which is shown in the following Table 1 (% by weight):

**Table 1**

| | Acti 80 | Acti 50 |
|---|---|---|
| Basic wax | 20 | 50 |
| Activating wax | 80 | 50 |

The base wax consisted of a mixture of microcrystalline wax (food grade) and paraffin wax, in a weight ratio of 80:20.

The activating wax consisted of a mixture of carnauba wax, beeswax and olive wax, in a weight ratio of 1:1:1.

For the fifth group, the graft area was covered with graft tape (buddy tape).

The coating procedure of the graft area by immersion was carried out by immersing the Grenache biont, until it completely covered the graft, in a bath of melted wax at a temperature of about 85°C. The residence time inside the wax bath was 1.5 sec. The amount of wax applied was 1.5 ± 0.1 g. The same procedure was then repeated a second time before fielding.

The grafted scions were then inserted into a rooting medium, so as to obtain the scions which were then planted in a cultivation medium.

After the time necessary for germination, the number of plants that generated healthy shoots was verified. The results, expressed as a percentage of plants sprouted with respect to the total of each group, are shown in the following Table 2:

**Table 2**

| Graft coating type | Number of plants sprouted |
|---|---|
| Rebwachs Pro^{™} | 65% |
| Standard grafting wax | 500 |
| Acti 80 | 850 |
| Acti 50 | 750 |
| Buddy tape | 400 |

Effectiveness of the treatment with the waxy material according to the invention is evident, which significantly increases success rate of the grafting, compared to the best product currently on the market, namely the Rebwachs Pro^{™} product. The improvement is even more evident by increasing the amount of added natural activating wax. In other words, the waxy material according to the invention makes it possible to improve the resistance of the plant with respect to the stress generated by the grafting, to atmospheric agents and to fungal, parasitic and/or pathogenic agents, with a consequent considerable increase in the number of plants which germinate.

Furthermore, natural waxes are products with a negative carbon footprint and therefore have a significantly higher environmental compatibility than that of the mineral waxes, of petroleum or synthetic origin that are currently in use, the production of which is burdened by a significant carbon footprint.

## Claims

1. Method for making grafted scions, which comprises:
preparing a first biont, consisting of a portion of a first plant variety, and a second biont, consisting of a portion of a second plant variety;
grafting the first biont and the second biont together so as to form a grafting area between the first and second plant varieties;
coating the grafting area with a waxy material comprising at least one natural wax, said waxy material being kept at a temperature such as to be in a fluid form;
leaving the coated grafting area to cool so as to obtain the solidification of said waxy material.

2. Method according to claim 1, wherein said at least one natural wax is selected from animal and vegetable waxes, or mixtures thereof.

3. Method according to claim 2, wherein said at least one natural wax is an animal wax selected from: wool wax (lanolin), waxes produced by insects, such as bees or cochineal, waxes produced by microorganisms.

4. Method according to claim 2, wherein said at least one natural wax is a vegetable wax selected from: palm wax, candelilla, retamo, linen, cotton, olive, soy, sunflower, rapeseed, carnauba, hemp, sugar cane, esparto, sorghum grain, rice; root and bark waxes, japanwax, cranberry, myrica; waxes from fruit cuticle, floral waxes, or waxes from natural oils, such as jojoba or sunflower.

5. Method according to any one of the preceding claims, wherein said at least one natural wax is made up of a mixture of at least two natural waxes selected from: carnauba wax, candelilla wax, olive wax, beeswax, lanolin.

6. Method according to claim 2, wherein said at least one natural wax is selected from olive wax and beeswax, or mixtures thereof.

7. Method according to any one of the preceding claims, wherein the waxy material comprises at least one natural wax having a purely biological function (activating wax) and at least one wax having a purely mechanical function (base wax).

8. Method according to claim 7, wherein the waxy material comprises from 2% to 95% by weight, preferably from 5% to 90% by weight, more preferably from 10% to 85% by weight, of at least one activating wax, and from 5% to 98% by weight, preferably from 10% to 95% by weight, more preferably from 15% to 90% by weight, of at least one base wax.

9. Method according to claim 7 or 8, wherein the activating wax is selected from: carnauba wax, candelilla wax, olive wax, beeswax, lanolin, or mixtures thereof; and the base wax is selected from: palm wax, sunflower wax, olive wax, soy wax, or mixtures thereof.

10. Method according to claim 7 or 8, wherein the activating wax is selected from: carnauba wax, candelilla wax, olive wax, beeswax, lanolin, or mixtures thereof; and the base wax is selected from: paraffin waxes, microcrystalline waxes, polyethylene waxes, amide waxes, Fischer-Tropsch waxes, acetylated mono-diglycerides, ethylene/vinyl acetate copolymers.

11. Method according to any one of the preceding claims, wherein the waxy material has a melting temperature from 40°C to 90°C, preferably from 55°C to 80°C.

12. Method according to any one of the preceding claims, wherein the coating step is carried out by immersing the biont which is intended to remain out of the ground to generate the new plant in a bath of waxy material in fluid form, until it covers the area of the graft.

13. Method according to claim 12, wherein the immersion is carried out for a time from 0.1 to 10 sec, preferably from 0.5 to 5 sec.
